(19) **Europäisches Patentamt**

**European Patent Office**

**Office européen des brevets**

(11) **EP 0 655 078 B1**

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(21) Anmeldenummer: **94908176.4**

(22) Anmeldetag: **12.08.1993**

(51) Int Cl.6: **C08K 7/06**, C08L 83/07

(86) Internationale Anmeldenummer:
**PCT/EP93/02153**

(87) Internationale Veröffentlichungsnummer:
**WO 94/04608 (03.03.1994 Gazette 1994/06)**

(54) **ZU ELEKTRISCH LEITFÄHIGEN ELASTOMEREN VERNETZENDE ORGANOPOLYSILOXANZUSAMMENSETZUNGEN**

ORGANOPOLYSILOXANE COMPOSITIONS CROSS-LINKABLE INTO ELECTROCONDUCTIVE ELASTOMERS

COMPOSITIONS D'ORGANOPOLYSILOXANE FORMANT PAR RETICULATION DES ELASTOMERES ELECTROCONDUCTEURS

(84) Benannte Vertragsstaaten:
**AT CH DE ES FR GB IT LI NL SE**

(30) Priorität: **13.08.1992 DE 4226841**

(43) Veröffentlichungstag der Anmeldung:
**31.05.1995 Patentblatt 1995/22**

(73) Patentinhaber: **WACKER-CHEMIE GMBH D-81737 München (DE)**

(72) Erfinder:
• **PRADL, Ferdinand**
  **04663 S.P. (BR)**
• **FINK, Peter**
  **D-8263 Burghausen (DE)**
• **BIRNEDER, Richard**
  **D-8346 Simbach (DE)**
• **NÖMMER, Katharina**
  **D-8261 Mehring (DE)**

(56) Entgegenhaltungen:
**EP-A- 0 113 277      EP-A- 0 173 561**
**WO-A-90/12842       GB-A- 2 046 384**
**US-A- 4 303 735**

• **DATABASE WPI Derwent Publications Ltd., London, GB; AN 81-64801 & JP,A,56 088 442 (SHIN-ETSU POLYMER) 17. Juli 1981**
• **DATABASE WPI Derwent Publications Ltd., London, GB; AN 81-64801 & JP,A,56 088 442**

**Beschreibung**

Die Erfindung betrifft zu elektrisch leitfähigen Elastomeren vernetzende Organopolysiloxanzusammensetzungen und deren Herstellung. Weiterhin betrifft die Erfindung die Herstellung von Formkörpern durch Spritzgießen.

Aus US-A 4,279,783 sind zu elektrisch leitfähigen Elastomeren vernetzende Organopolysiloxanzusammensetzungen bekannt, die durch Mischen von zu elektrisch leitfähigem Elastomer vernetzender Organopolysiloxanmasse, die Ruß enthält, mit 0,3 bis 5,0 Gew.-%, bezogen auf das Gesamtgewicht der Organopolysiloxanzuammensetzung, Kohlefasern, die eine durchschnittliche Länge von 1 bis 6 mm aufweisen, erhalten werden.

Es bestand die Aufgabe, zu elektrisch leitfähigen Elastomeren vernetzende Organopolysiloxanzusammensetzungen bereitzustellen, die ohne Mitverwendung von Lösungsmittel hergestellt werden können, die spaltproduktfrei sind, die pumpbar sind, aus denen Formkörper durch Spritzgießen erhalten werden können und mit denen Elastomere erhalten werden, die einen niedrigeren spezifischen Widerstand als bisher bekannte elektrisch leitfähige Organopolysiloxanelastomere aufweisen. Die Aufgabe wird durch die Erfindung gelöst.

Gegenstand der Erfindung sind zu elektrisch leitfähigen Elastomeren vernetzende Organopolysiloxanzusammensetzungen enthaltend
zu elektrisch nicht leitfähigem Elastomer additionsvernetzende Organopolysiloxanmasse und

(a) 11 bis 30 Gew.-%, bezogen auf das Gesamtgewicht der Organopolysiloxanzusammensetzung, Kohlefasern mit einer durchschnittlichen Länge von 0,1 bis 10 mm.

Die erfindungsgemäßen Organopolysiloxanzusammensetzungen besitzen eine durchschnittliche Viskosität von $0,5 \cdot 10^6$ bis $5 \cdot 10^6$ mPa·s bei 25°C, bevorzugt von $1 \cdot 10^6$ bis $3 \cdot 10^6$ mPa·s bei 25°C.

Die in den erfindungsgemäßen Organopolysiloxanzusammensetzungen verwendeten Kohlefasern (a) besitzen bevorzugt eine Länge von 0,5 bis 3 mm und einen Durchmesser von vorzugsweise 5 bis 10 μm, bevorzugt von 6 bis 8 μm, und sind im Handel käuflich erwerblich. Unter Kohlefasern sind auch Graphitfasern zu verstehen.

Als zu elektrisch nicht leitfähigen Elastomeren additionsvernetzende Organopolysiloxanmassen können alle bisher bekannten zu elektrisch nicht leitfähigen Elastomeren additionsvernetzenden Organopolysiloxanmassen verwendet werden. Die zu elektrisch nicht leitfähigen Elastomeren additionsvernetzenden Organopolysiloxanmassen enthalten vorzugsweise als wesentliche Bestandteile

(b) Organopolysiloxan enthaltend Si-gebundene Kohlenwasserstoffreste mit aliphatischen Kohlenstoff-Kohlenstoff-Mehrfachbindungen,

(c) Si-gebundene Wasserstoffatome aufweisendes Organopolysiloxan,

(d) Katalysator und gegebenenfalls

(e) Inhibitor.

Bevorzugt als Organopolysiloxane (b) sind solche der allgemeinen Formel

$$R_a^1 R_{3-a} SiO(R_2 SiO)_n (R^1 RSiO)_m R_{3-a} R_a^1,$$

wobei R gleiche oder verschiedene, von aliphatischen Kohlenstoff-Kohlenstoff-Mehrfachbindungen freie, einwertige Kohlenwasserstoffreste, die gegebenenfalls halogeniert sein können, bedeutet,
$R^1$ einen einwertigen Kohlenwasserstoffrest mit aliphatischen Kohlenstoff-Kohlenstoff-Mehrfachbindungen bedeutet,
a 0 oder 1,
n eine ganze Zahl und m 0 oder eine ganze Zahl bedeutet,
wobei die Summe m+n eine ganze Zahl mit einem solchen Wert bedeutet, daß die durchschnittliche Viskosität dieser Organopolysiloxane 100 bis $10^6$ mPa·s, bevorzugt 200 bis 200 000 mPa·s, bei 25°C beträgt,
mit der Maßgabe, daß je Molekül mindestens 2 Reste $R^1$ vorliegen.

Vorzugsweise enthalten die Reste R 1 bis 18 Kohlenstoffatome je Rest. Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogenierte Kohlenwasserstoffreste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Beispiele für Reste $R^1$ sind Alkenylreste, wie der Vinyl-, Allyl-, Butenyl- und Hexenylrest, wobei der Vinylrest bevorzugt ist.

Wird als Bestandteil (b) Organopolysiloxan mit Si-gebundenen Vinylgruppen verwendet, enthalten diese Organopolysiloxane vorzugsweise 0,03 bis 1,1 Gew.-%, bevorzugt 0,05 bis 0,7 Gew.-%, Vinylgruppen.

Es kann eine Art von Bestandteil (b), aber auch ein Gemisch aus mindestens zwei verschiedenen Bestandteilen (b) verwendet werden.

Bevorzugt als Si-gebundene Wasserstoffatome aufweisende Organopolysiloxane sind lineare, cyclische oder verzweigte Organopolysiloxane aus Einheiten der Formel

$$R_b H_c SiO_{\frac{4-b-c}{2}} ,$$

wobei R die oben dafür angegebene Bedeutung hat,

b 0, 1, 2 oder 3,

c 0 oder 1

und die Summe von b+c ≤ 3 ist,

mit der Maßgabe, daß je Molekül mindestens 2, insbesondere mindestens 3, Si-gebundene Wasserstoffatome vorliegen.

Besonders bevorzugt als Si-gebundene Wasserstoffatome aufweisende Organopolysiloxane sind solche der allgemeinen Formel

$$H_d R_{3-d} SiO(R_2 SiO)_x (HRSiO)_y R_{3-d} H_d ,$$

wobei R die oben dafür angegebene Bedeutung hat,

d 0 oder 1,

x 0 oder eine ganze Zahl und y 0 oder eine ganze Zahl bedeutet, wobei die Summe x+y eine ganze Zahl mit einem solchen Wert bedeutet, daß die durchschnittliche Viskosität dieser Organopolysiloxane 1 bis 1 000 mPa·s bei 25°C, insbesondere 300 bis 500 mPa·s bei 25°C, beträgt,

mit der Maßgabe, daß je Molekül mindestens 2, insbesondere mindestens 3, Si-gebundene Wasserstoffatome vorliegen.

Bevorzugte Beispiele für Organopolysiloxane (c) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten.

Die Organopolysiloxane (c) enthalten vorzugsweise 0,01 bis 1,6 Gew.-%, bevorzugt 0,1 bis 1 Gew.-%, Si-gebundene Wasserstoffatome.

Es kann eine Art von Bestandteil (c), aber auch ein Gemisch aus mindestens zwei verschiedenen Arten Bestandteil (c) verwendet werden.

Wird als Organopolysiloxan (b) Si-gebundene Vinylgruppen aufweisendes Organopolysiloxan verwendet, liegt vorzugsweise Si-gebundener Wasserstoff in Mengen von 0,1 bis 15 Si-gebundenen Wasserstoffatomen je Si-gebundenem Vinylrest vor.

Als Katalysatoren (d), die die Anlagerung von Si-gebundenem Wasserstoff an aliphatische Doppelbindung fördern, können die gleichen Katalysatoren eingesetzt werden, die auch bisher zur Förderung der Anlagerung von Si-gebundenem Wasserstoff an aliphatische Doppelbindung eingesetzt werden konnten. Beispiele für solche Katalysatoren (d) sind metallisches und feinverteiltes Platin, Ruthenium, Rhodium, Palladium und Iridium, wobei sich diese Metalle jeweils auf festen Trägern, wie Siliciumdioxyd, Aluminiumoxyd oder Aktivkohle, befinden können, und Verbindungen bzw. Komplexe dieser Elemente, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid, Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, Ammonium-Platinkomplexe gemäß EP-B 110 370 und Platinverbindungen bzw. -komplexe gemäß US-A 4,177,341.

Wird als Katalysator (d) Platin, Platinverbindung bzw. Platinkomplex eingesetzt, so wird derartiger Katalysator vorzugsweise in Mengen von 5 bis 50 Gew.-ppm (Gewichtsteilen je Million Gewichtsteilen), jeweils berechnet als elementares Platin und bezogen auf das Gesamtgewicht der Bestandteile (b) und (c), verwendet.

Es kann eine Art von Katalysator (d), aber auch ein Gemisch aus mindestens zwei verschiedenen Arten derartiger Katalysatoren (d) verwendet werden.

Als inhibitoren (e), d.h. die Vernetzung verzögernde bzw. regelnde Mittel, können auch bei den zu elektrisch nicht leitfähigen Elastomeren additionsvernetzenden Organopolysiloxanmassen alle Inhibitoren verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder silicium-organische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 2-Methyl-1-pentin-3-ol, 2,5-Dimethyl-3-hexin-2,5-diol und 3,5-Dimethyl-1-hexin-3-ol, Inhibitoren gemäß US-A 2,476,166, wie eine Mischung aus Diallylmaleinat und Vinylacetat, und Inhibitoren gemäß US 4,504,645, wie Maleinsäurenonoester.

Vorzugsweise wird der Inhibitor (e) in Mengen von 0,01 bis 0,2 Gew.-%, bezogen auf das Gesamtgewicht der Bestandteile (b) und (c), eingesetzt.

Zusätzlich zu den Bestandteilen (b), (c), (d) und gegebenenfalls (e) können die zu elektrisch nicht leitfähigen Elastomeren additionsvernetzenden Organopolysiloxanmassen Stoffe, die in den bisher bekannten zu elektrisch nicht leitfähigen Elastomeren additionsvernetzenden Organopolysiloxanmassen vorliegen konnten, enthalten. Beispiele für solche weiteren Stoffe sind Füllstoffe mit einer BET-Oberfläche von mindestens 50 m$^2$/g, wie pyrogen erzeugtes Siliciumdioxid oder gefälltes Siliciumdioxid mit einer BET-Oberfläche von mindestens 50 m$^2$/g, Füllstoffe mit einer BET-Oberfläche von weniger als 50 m$^2$/g, wie Quarzmehl, Glasfaser, gefälltes Siliciumdioxid mit einer BET-Oberfläche von weniger als 50 m$^2$/g oder Diatomeenerde, Pigmente, lösliche Farbstoffe, Weichmacher, Organopolysiloxanharze, rein organische Harze, wie Polyvinylchloridpulver, und Mittel zur Verbesserung der Haftung der Elastomere auf den Unterlagen, auf denen sie erzeugt wurden.

Die oben genannten Füllstoffe können hydrophobiert sein, beispielsweise durch die Behandlung mit Organosilanen, Organosiloxanen oder Disilazanen, wie Hexamethyldisilazan.

Die Herstellung der erfindungsgemäßen zu elektrisch leitfähigen Elastomeren vernetzenden Organopolysiloxanzusammensetzungen erfolgt durch Vermischen der Bestandteile (a) bis (e) nach für die Bereitung von additionsvernetzenden Organopolysiloxanzusammensetzungen üblichen Verfahren. Die erfindungsgemäßen Organopolysiloxanzusammensetzungen werden vorzugsweise aus mehr als einer Komponente, bevorzugt aus zwei Komponenten, bereitet. Die erste Komponente enthält dabei Bestandteil (b) und (d), und die zweite Komponente enthält den Bestandteil (c), oder Bestandteil (d) liegt in einer dritten Komponente vor. Bestandteil (a) liegt vorzugsweise in der ersten und zweiten Komponente, bevorzugt zu gleichen Anteilen, vor. Der Bestandteil (e) liegt vorzugsweise in der ersten Komponente vor.

Die Vernetzung der erfindungsgemäßen Organopolysiloxanzusammensetzungen wird vorzugsweise bei 15°C bis 250°C, bevorzugt bei 80°C bis 200°C, durchgeführt.

Die aus den erfindungsgemäßen Organopolysiloxanzusammensetzungen erhaltenen elektrisch leitfähigen Elastomere besitzen vorzugsweise einen spezifischen Widerstand von weniger als 1 Ohm x cm.

Die Herstellung von Formkörpern aus den erfindungsgemäßen Organopolysiloxanzusammensetzungen erfolgt durch Spritzgießen, Preßformen, Transferpreßformen, Spritzprägen, wobei das Spritzgießen bevorzugt ist.

Das Verfahren zur Herstellung von Formkörpern durch Spritzgießen kann schußweise, halbkontinuierlich oder vollkontinuierlich durchgeführt werden.

Bevorzugt sind durch Spritzgießen hergestellte Formkörper. Beispiele für solche Formkörper sind Kabelstränge für Zündkabel in Kraftfahrzeugen und Pillen in Telefon-, Computer- und Fernbedienungskontaktmatten oder Elektroden.

Die erfindungsgemäßen Organopolysiloxanzusammensetzungen können weiterhin verwendet werden zur Herstellung von Kabelendverschlüssen, Konnektoren oder Schutzschichten zur Abschirmung von elektromagnetischer Störstrahlung.

In den folgenden Beispielen beziehen sich alle Angaben von Teilen und Prozentsätzen auf das Gewicht, soweit nichts anderes angegeben ist.

Beispiele 1 bis 3:

a) Eine Basismischung wurde jeweils hergestellt, indem 34,6 Teile eines Vinyldimethylsiloxygruppen als endständige Einheiten aufweisenden Dimethylpolysiloxans mit einer Viskosität von 20 000 mPa·s bei 25°C, 8,6 Teile eines Vinyldimethylsiloxygruppen als endständige Einheiten aufweisenden Dimethylpolysiloxans mit einer Viskosität von 1 000 mPa·s bei 25°C, 10,4 Teile einer durch Behandlung mit Hexamethyldisilazan hydrophobierten, pyrogen erzeugten Kieselsäure mit einer BET-Oberfläche von 300 $m^2$/g und jeweils 16,7, 19,0 und 23,0 Teile Kohlefasern mit einer durchschnittlichen Länge von 1 mm miteinander vermischt wurden.

b) Eine Komponente A wurde jeweils erhalten, indem jeweils 100 Teile der oben unter a) beschriebenen Basismischung mit 0,5 Teilen eines Platin-1,1,3,3-Tetramethyl-1,3-divinylsiloxan-Komplexes, 0,85 Teilen eines Vinyldimethylsiloxygruppen als endständige Einheiten aufweisenden Diorganopolysiloxans aus Dimethylsiloxaneinheiten und 20 Mol-% Vinylmethylsiloxaneinheiten mit einer Viskosität von 600 mPa·s bei 25°C und 0,1 Teilen Ethinylcyclohexanol vermischt wurden.

c) Eine Komponente B wurde jeweils erhalten, indem jeweils 100 Teile der oben unter a) beschriebenen Basismischung mit 8 Teilen eines Mischpolymerisats aus Dimethylsiloxan-, Methylhydrogensiloxan- und Trimethylsiloxaneinheiten mit einer Viskosität von 400 mPa·s bei 25°C, das 0,45 Gew.-% Si-gebundenen Wasserstoff enthält, vermischt wurden.

d) Die Komponente A und die Komponente B wurden dann jeweils im Gewichtsverhältnis 1:1 miteinander gemischt. Aus dieser Mischung wurden durch Vulkanisation bei 150°C jeweils Platten mit einer Stärke von 2 mm hergestellt, an denen jeweils der spezifische Durchgangswiderstand gemessen wurde. Die Ergebnisse sind in der Tabelle zusammengefaßt.

Vergleichsversuch 1:

Die Arbeitsweise von Beispiel 1 wurde wiederholt mit der Abänderung, daß in der Basismischung 17,1 Teile Ruß anstelle von 16,7 Teilen Kohlefasern eingesetzt wurden. Die Komponenten A und B wurden, wie in Beispiel 1 beschrieben, hergestellt und im Gewichtsverhältnis 1:1 miteinander vermischt. Die Vulkanisation und die Bestimmung des spezifischen Durchgangswiderstandes erfolgte wie in Beispiel 1 beschrieben. Die Ergebnisse sind in der Tabelle zusammengefaßt.

Vergleichsversuch 2 bis 4 (US-A 4,279,783):

Die Arbeitsweise von Beispiel 1 wurde wiederholt mit der Abänderung, daß in der Basismischung 17,1 Teile Ruß und jeweils 0,5, 2,0 und 5,0 Teile Kohlefasern anstelle von 16,7 Teilen Kohlefasern eingesetzt wurden. Die Komponenten A und B wurden wie in Beispiel 1 beschrieben hergestellt und im Gewichtsverhältnis 1:1 miteinander vermischt. Die Vulkanisation und die Bestimmung des spezifischen Durchgangswiderstandes erfolgte wie in Beispiel 1 beschrieben. Die Ergebnisse sind in der Tabelle zusammengefaßt.

Vergleichsversuch 5 und 6:

Die Arbeitsweise von Beispiel 1 wurde wiederholt mit der Abänderung, daß in der Basismischung zusätzlich zu den 16,7 Teilen Kohlefasern jeweils 5 und 10 Teile Ruß eingesetzt wurden. Die Komponenten A und B wurden wie in Beispiel 1 beschrieben hergestellt und im Gewichtsverhältnis 1:1 miteinander vermischt. Die Vulkanisation und die Bestimmung des spezifischen Durchgangswiderstandes erfolgte wie in Beispiel 1 beschrieben. Die Ergebnisse sind in der Tabelle zusammengefaßt.

Tabelle:

| Biespiel bzw. Vergleichsversuch | Ruß* (%) | Kohlefaser* (%) | spez. Durchgangswiderstand (Ohm x cm) |
|---|---|---|---|
| B1 | - | 16,7 | 0,5 |
| B2 | - | 19,0 | 0,5 |
| B3 | - | 23,0 | 0,5 |
| V1 | 17,1 | - | 12,1 |
| V2 | 17,1 | 0,5 | 9,9 |

* bezogen auf das Gesamtgewicht der Organopolysiloxanzusammensetzung

Tabelle:   (fortgesetzt)

| Biespiel bzw. Vergleichsversuch | Ruß* (%) | Kohlefaser* (%) | spez. Durchgangswiderstand (Ohm x cm) |
|---|---|---|---|
| V3 | 17,1 | 2,0 | 6,3 |
| V4 | 17,1 | 5,0 | 4,1 |
| V5 | 5,0 | 16,7 | 9,7 |
| V6 | 10,0 | 16,7 | 121,0 |

* bezogen auf das Gesamtgewicht der Organopolysiloxanzusammensetzung

Beispiel 4:

Zur Spritzgußverarbeitung wurden jeweils die Komponenten A und B aus den Beispielen 1 bis 3, verpackt in geeignete Gefäße, in eine handelsübliche Zweikomponentendosiermaschine eingebracht und mit Hilfe von hydraulischem Druck und den integrierten Pumpen über ein Schlauchleitungssystem der Spritzgießmaschine zugeführt. Dabei war die innige Vermischung beider Komponenten, die zunächst in der Mischkammer, dann im statischen Mischer erfolgte, sehr wichtig. In der Spritzgießmaschine befand sich zur Formgebung und Vulkanisation der gemischten Kautschukmasse ein Werkzeug, das nach dem Stand der Technik konstruiert ist und gegebenenfalls auch einen vollautomatischen Betrieb ermöglicht, und eine Entformungshilfe. Es ließen sich leitfähige Kabelstränge für Zündkabel in Kraftfahrzeugen sowie leitfähige Pillen für Telefon-, Computer- und Fernbedienungskontaktmatten herstellen.

**Patentansprüche**

1.  Zu elektrisch leitfähigen Elastomeren vernetzende Organopolysiloxanzusammensetzungen, die eine Viskosität von $0,5 \cdot 10^6$ bis $5 \cdot 10^6$ mPa·s bei 25°C besitzen, enthaltend
    zu elektrisch nicht leitfähigem Elastomer additionsvernetzende Organopolysiloxanmasse und

    (a) 11 bis 30 Gew.-%, bezogen auf das Gesamtgewicht der Organopolysiloxanzusammensetzung, Kohlefasern mit einer durchschnittlichen Länge von 0,1 bis 10 mm.

2.  Organopolysiloxanzusammensetzungen nach Anspruch 1, dadurch gekennzeichnet, daß die zu elektrisch nicht leitfähigem Elastomer additionsvernetzende Organopolysiloxanmasse als wesentliche Bestandteile

    (b) Organopolysiloxan enthaltend Si-gebundene Kohlenwasserstoffreste mit aliphatischen Kohlenstoff-Kohlenstoff-Mehrfachbindungen,

    (c) Si-gebundene Wasserstoffatome aufweisendes Organopolysiloxan,

    (d) Katalysator und gegebenenfalls

    (e) Inhibitor

    enthält.

3.  Organopolysiloxanzusanmensetzungen nach Anspruch 2, dadurch gekennzeichnet, daß als Organopolysiloxan (b) Si-gebundene Vinylgruppen aufweisendes Organopolysiloxan verwendet wird.

4.  Verfahren zur Herstellung von zu elektrisch leitfähigen Elastomeren vernetzenden Organopolysiloxanzusammensetzungen nach einem der Ansprüche 1 bis 3, dadurch gekennzeichnet, daß die Bestandteile (a) bis (e) miteinander vermischt werden.

5.  Verfahren zur Herstellung von Formkörpern durch Spritzgießen von Organopolysiloxanzusammensetzungen, dadurch gekennzeichnet, daß Organopolysiloxanzusammensetzungen nach einem der Ansprüche 1 bis 3 eingesetzt werden.

6.  Formkörper erhältlich nach dem Verfahren gemäß Anspruch 5.

**7.** Formkörper nach Anspruch 6, dadurch gekennzeichnet, daß es Kabelstränge für Zündkabel in Kraftfahrzeugen oder Pillen in Telefon-, Computer- oder Fernbedienungskontaktmatten sind.

**Claims**

**1.** Organopolysiloxane compositions which crosslink to give electrically conductive elastomers and have a viscosity of 0.5 x 10$^6$ to 5 x 10$^6$ mPa.s at 25°C, comprising
an organopolysiloxane mass which crosslinks by addition to give an electrically non-conductive elastomer and

(a) 11 to 30% by weight, based on the total weight of the organopolysiloxane composition, of carbon fibres having an average length of 0.1 to 10 mm.

**2.** Organopolysiloxane compositions according to Claim 1, characterized in that the organopolysiloxane mass which crosslinks by addition to give an electrically non-conductive elastomer comprises, as essential constituents,

(b) an organopolysiloxane containing Si-bonded hydrocarbon radicals having aliphatic carbon-carbon multiple bonds,
(c) an organopolysiloxane containing Si-bonded hydrogen atoms,
(d) a catalyst, and if appropriate
(e) an inhibitor.

**3.** Organopolysiloxane compositions according to Claim 2, characterized in that an organopolysiloxane containing Si-bonded vinyl groups is used as organopolysiloxane (b).

**4.** Process for the preparation of organopolysiloxane compositions, according to one of Claims 1 to 3, which crosslink to give electrically conductive elastomers, characterized in that constituents (a) to (e) are mixed with one another.

**5.** Process for the production of shaped articles by injection moulding organopolysiloxane compositions, characterized in that organopolysiloxane compositions according to one of Claims 1 to 3 are employed.

**6.** Shaped articles obtainable by the process according to Claim 5.

**7.** Shaped articles according to Claim 6, characterized in that they are looms of cable for ignition cables in motor vehicles or in telephone, computer or remote control contact mats.

**Revendications**

**1.** Compositions d'organopolysiloxane formant par réticulation des élastomères électroconducteurs, qui possèdent une viscosité de 0,5 x 10$^6$ à 5 x 10$^6$ mPa.s à 25°C, contenant
une masse d'organopolysiloxane formant par réticulation à addition des élastomères non électroconducteurs et

(a) de 11 à 30 % en poids, par rapport au poids total de la composition d'organopolysiloxane, de fibres de carbone ayant une longueur moyenne de 0,1 à 10 mm.

**2.** Compositions d'organopolysiloxane selon la revendication 1, caractérisées en ce que la masse d'organopolysiloxane formant par réticulation à addition des élastomères non électroconducteurs contient, en tant que constituants essentiels,

(b) un organopolysiloxane contenant des résidus d'hydrocarbures liés au Si ayant des liaisons multiples carbone-carbone aliphatiques,
(c) un organopolysiloxane présentant des atomes d'hydrogène liés au Si,
(d) un catalyseur et, le cas échéant,
(e) un agent d'inhibition.

**3.** Compositions d'organopolysiloxane selon la revendication 2, caractérisées en ce que l'on utilise en tant qu'organopolysiloxane (b) un organopolysiloxane présentant des groupements vinyliques liés au Si.

**4.** Procédé de fabrication de compositions d'organopolysiloxane formant par réticulation des élastomères électroconducteurs selon l'une quelconque des revendications 1 à 3, caractérisé en ce que les constituants (a) à (e) sont mélangés les uns aux autres.

**5.** Procédé de fabrication de corps de forme par moulage par injection de compositions d'organopolysiloxane, caractérisé en ce que l'on utilise des compositions d'organopolysiloxane selon l'une quelconque des revendications 1 à 3.

**6.** Corps de forme disponible conformément au procédé selon la revendication 5.

**7.** Corps de forme selon la revendication 6, caractérisé en ce qu'il s'agit de faisceaux de câble pour câbles d'allumage dans des véhicules poids lourds ou des pastilles dans des paillassons à contact pour applications relatives au téléphone, aux ordinateurs ou aux télécommunications.